# EUROPÄISCHE PATENTSCHRIFT

(11) **EP 2 861 839 B1**
(45) Veröffentlichungstag und Bekanntmachung des Hinweises auf die Patenterteilung: **20.02.2019**
(21) Anmeldenummer: 13719088.0
(22) Anmeldetag: 24.04.2013
(51) Int. Cl.: F01M 13/00

(54) **VERFAHREN ZUM VERMEIDEN EINER VORENTFLAMMUNG IN EINEM VERBRENNUNGSMOTOR**
METHOD FOR PREVENTING A PREMATURE IGNITION IN AN INTERNAL COMBUSTION ENGINE
PROCÉDÉS PERMETTANT D'ÉVITER UN PRÉALLUMAGE DANS UN MOTEUR À COMBUSTION INTERNE

(30) Priorität: 14.06.2012 DE 102012011834
(43) Veröffentlichungstag der Anmeldung: 22.04.2015
(73) Patentinhaber: Volkswagen Aktiengesellschaft, 38440 Wolfsburg (DE)
(72) Erfinder: BIRKIGT, Andreas, 38442 Wolfsburg (DE)
(86) Internationale Anmeldenummer: PCT/EP2013/058508
(87) Internationale Veröffentlichungsnummer: WO 2013/185966

(56) Entgegenhaltungen:
- WO-A1-2012/095953
- DE-A1-102008 061 057
- DE-B4-102008 038 102
- DE-U1- 20 103 874
- DE-U1-202007 013 145

## Beschreibung

Die vorliegende Erfindung betrifft Verfahren zum Vermeiden einer Vorentflammung einer Zylinderladung vor einem geplanten Zündzeitpunkt in einem Verbrennungsmotor.

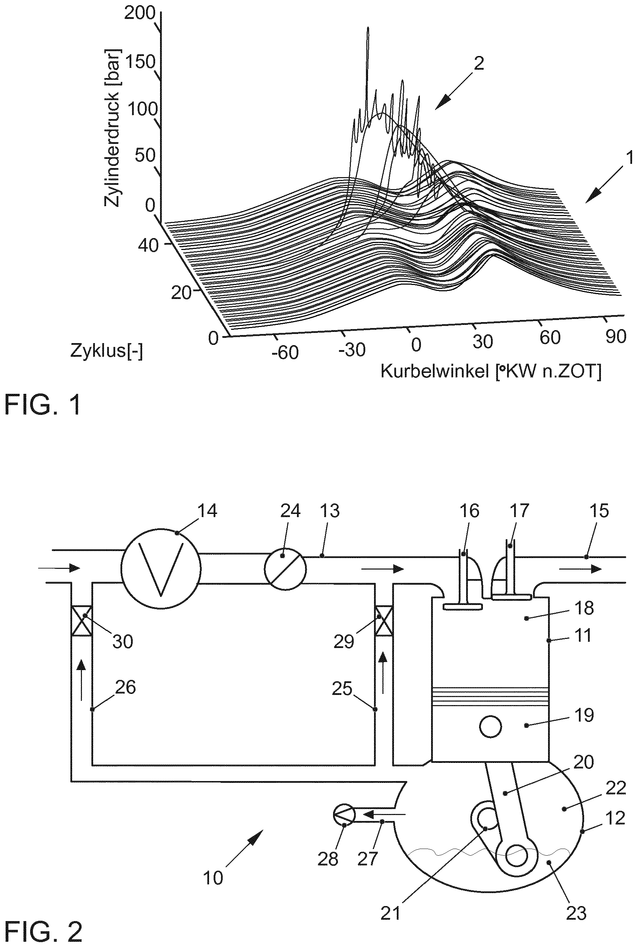

Um den Kraftstoffverbrauch von Fahrzeugen, wie zum Beispiel Personenkraftwagen oder Lastkraftwagen, zu verringern, werden Verbrennungsmotoren, insbesondere Ottomotoren, verkleinert und mit einem Verdichter, beispielsweise einem Turbolader, aufgeladen. Das Verkleinern der Verbrennungsmotoren wird auch als "Downsizing" bezeichnet. Im Zuge dieses Downsizings von Ottomotoren mit Hochaufladung und bei besonders kritischen Bedingungen, wie zum Beispiel schlechtem Kraftstoff oder hohen Außentemperaturen, kann bei geringen Drehzahlen und hohen Motorlasten eine Verbrennungsanomalie auftreten, welche als Vorentflammung bezeichnet wird. Unter anderem können Brennraumablagerungen, heiße Bauteiltemperaturen und Schmierölbestandteile zu derartigen Vorentflammungen führen. Der Begriff "Vorentflammung" bezeichnet unkontrollierte Zündprozesse einer Zylinderladung mehr oder weniger deutlich vor dem geplanten Zündzeitpunkt. Durch die frühzeitige Umsetzung des Luft-Kraftstoff-Gemisches und der zusätzlichen Kompression kann es bei der Vorentflammung zu sehr hohen Zylinderdrücken kommen. Durch den erhöhten thermischen Zustand nach Brennbeginn kann es dabei häufig zu einer Detonation mit anschließender klopfender Verbrennung kommen. Das Zusammentreffen dieser Bedingungen kann zu Zylinderdrücken von mehr als 250 bar führen, wodurch ein Verschleiß des Verbrennungsmotors erhöht wird oder der Verbrennungsmotor beschädigt werden kann, so dass der Verbrennungsmotor sofort ausfällt. Das Auftreten von einer Vorentflammung kündigt sich üblicherweise in keiner Weise in den vorgehenden Arbeitsspielen an. Fig. 1 zeigt Zylinderdruckverläufe 1 von regulären Verbrennungen und Zylinderdruckverläufe 2 von Verbrennungen mit Vorentflammung. Der Zylinderdruck ist dabei über dem Kurbelwellenwinkel für verschiedene Zyklen aufgetragen. Wie aus der Fig. 1 ersichtlich ist, steigt bei einer Vorentflammung der Zylinderdruck aufgrund der frühzeitigen Verbrennung bereits während der Kompressionsphase vor dem oberen Totpunkt erheblich an. Im Unterschied zu Glühzündung tritt die Vorentflammung jedoch im Allgemeinen nur unter bestimmten Voraussetzungen auf. Zunächst sind hohe Verdichtungstemperaturen erforderlich, um Vorreaktionen und im Anschluss die Selbstzündung einzuleiten. Diese Temperaturen werden durch eine Kombination aus hohen Verdichtungsverhältnissen und hohen Aufladegraden bei beispielsweise turbogeladenen Ottomotoren erreicht. Zusätzlich wird eine ausreichende Zeitspanne für die Einleitung von Vorreaktionen und der Selbstzündung benötigt, so dass eine Vorentflammung verstärkt in einem Drehzahlbereich von 1500-2500 U/min auftreten kann.

In diesem Zusammenhang ist aus der DE 10 2008 038 102 B4 ein Verfahren zur Verhinderung einer Vorentflammung eines Kraftstoff-Luft-Gemisches in einem Zylinderraum einer Ottomotorbetriebenen Brennkraftmaschine mit hohem Verdichtungsverhältnis bekannt. Bei dem Verfahren wird für den jeweiligen aktuellen Arbeitszyklus anhand eines erfassten Winkelgeschwindigkeitsverlaufs einer Kurbelwelle der Brennkraftmaschine ein zugehöriger Zylinderinnendruck und daraus eine Verbrennungsschwerpunktlage des jeweiligen Zylinders ermittelt. Daraus wird für den nachfolgenden Arbeitszyklus eine zu erwartende Vorentflammungsneigung errechnet und bei Ermittlung einer Überschreitung einer applizierbaren Winkelschwelle der Verbrennungsschwerpunktlage für diesen vorhergehenden Arbeitszyklus in der aktuellen Arbeitsphase eine zusätzliche Kraftstoffmenge in den jeweiligen Zylinder eingespritzt.

Im Rahmen der vorliegenden Erfindung wurde festgestellt, dass unter besonders kritischen Betriebsbedingungen Vorentflammungen auftreten können, wenn Ablagerungen und Schmierölbestandteile in dem Brennraum vorhanden sind. In Abhängigkeit von motorischen Randbedingungen kann es jedoch im Allgemeinen zur Ablagerungsbildung und zum Transport von Schmierölbestandteilen in den Brennraum kommen. Beispielsweise kommt bei einem Ottomotor zur Laststeuerung eine so genannte Quantitätsregelung zum Einsatz. Das bedeutet, dass bei einer geringeren Leistungs- oder Drehmomentabgabe eine geringe Füllung mit Frischluft und entsprechend bei einer hohen Leistungs- bzw. Drehmomentabgabe eine hohe Füllung mit Frischluft nötig ist. Die Zylinderfüllung wird dabei über den Saugrohrdruck eingestellt. Bei geringen Lasten kann der absolute Saugrohrdruck beispielsweise auf bis zu 250 mbar abgesenkt werden. Dieser Druck herrscht dementsprechend auch im Brennraum, solange die Einlassventile geöffnet sind. Im Zylinderkurbelgehäuse liegt hingegen in erster Näherung der Umgebungsluftdruck an und somit kann es bei geringen Motorlasten zu einem Druckgefälle zwischen dem Kurbelgehäuse und dem Brennraum kommen. Dadurch kann es zu einem Transport von Schmieröl aus dem Kurbelgehäuse in den Brennraum kommen.

In diesem Zusammenhang ist beispielsweise aus der EP 1 310 639 A1 eine Kurbelgehäuseentlüftung für eine Brennkraftmaschine mit Abgasturboladung bekannt. Die Kurbelgehäuseentlüftung umfasst eine erste Entlüftungsleitung, die auf der einen Seite mit dem Kurbelgehäuseraum und auf der anderen Seite mit einem Saugrohr der Brennkraftmaschine verbunden ist, und eine zweite Entlüftungsleitung, die auf der einen Seite mit dem Kurbelgehäuseraum und auf der anderen Seite mit der Ansaugseite des Verdichters verbunden ist. Damit wird bei der Kurbelgehäuseentlüftung sowohl im Ladedruckbetrieb als auch im Saugbetrieb der Brennkraftmaschine sichergestellt, dass der Unterdruck im Kurbelgehäuseraum einstellbar ist. Druckregler stellen sicher, dass im Kurbelgehäuseraum ein konstanter Unterdruckwert eingestellt wird, welcher gegenüber dem Unterdruckwert im Saugrohr einen reduzierten Unterdruck aufweist.

Die DE 20 2006 017 813 U1 betrifft eine Brennkraftmaschine mit einer Kurbelgehäusebelüftungsleitung. In der Entlüftungsleitung ist ein Kurbelgehäusedruckregelventil angeordnet, mit dem der Druck im Kurbelgehäuse innerhalb eines vorgegebenen Druckbereichs gehalten wird.

Die DE 103 20 054 A1 betrifft ein Verfahren und eine Vorrichtung zum Betreiben einer Brennkraftmaschine mit einem Saugrohr und einem Entlüftungskanal einer Entlüftung. Bei der Entlüftung kann es sich insbesondere um eine Tankentlüftung oder eine Kurbelgehäuseentlüftung handeln. Der Entlüftungskanal wird dem Saugrohr der Brennkraftmaschine zugeführt. Ein Kurbelgehäuseentlüftungsventil dient zur Begrenzung des Unterdrucks im Kurbelgehäuse.

Die DE 10 2008 061 057 A1 offenbart ein Verfahren zum Betreiben einer Brennkraftmaschine mit einem Kurbelraum, einer Kurbelraumentlüftung und einer Sauganlage, wobei zur Reduzierung eines Schmiermittelverbrauchs der Brennkraftmaschine der Druck im Kurbelraum in Abhängigkeit von einem Differenzdruck zwischen Sauganlage und Kurbelraum reduzierbar ist.

Die DE 201 03 874 U1 beschreibt eine Einrichtung für die Be- und Entlüftung eines Kurbelgehäuses einer Brennkraftmaschine, mit einer von einem Saugrohr der Brennkraftmaschine in das Kurbelgehäuse führenden Frischluftleitung mit einem Rückschlagventil und mit einer vom Kurbelgehäuse zum Saugrohr führenden Kurbelgehäuse-Entlüftungsleitung mit einem Ölnebelabscheider, wobei im Verlauf der Kurbelgehäuse-Entlüftungsleitung eine Saugpumpe vorgesehen ist, mit der im Kurbelgehäuse gegenüber dem Umgebungsluftdruck ein Unterdruck erzeugbar ist.

Die DE 20 2007 013 145 U1 unterrichtet über einen Abscheider für mit Flüssigkeitstropfen oder Nebel kontaminiertes gasförmiges Medium, mit einem Gehäuse, das einen Einlass für das kontaminierte Medium und einen Auslass für das gereinigte Medium sowie einen Ablauf für die abgeschiedene Flüssigkeit aufweist und das mit mindestens einer Filtervorrichtung versehen ist, wobei zur Reinigung des kontaminierten Mediums und zwischen der Filtervorrichtung und dem Auslass mindestens eine Unterdruck erzeugende Vorrichtung angeordnet ist, die ungeregelt mit annähernd konstanter Leistung saugt. Der Auslassbereich ist zur Rückführung eines Teils des gereinigten gasförmigen Mediums über eine Druckausgleichsleitung mit dem Einlassbereich verbunden.

Schließlich beschreibt die WO 2012/095953 A1 eine System für einen Verbrennungsmotor, mit dem es möglich ist, das Auftreten einer Vorzündung durch die Strömung von Öl in die Zylinder zu unterdrücken.

Aufgabe der vorliegenden Erfindung ist es daher, eine Vorentflammung einer Zylinderladung vor einem geplanten Zündzeitpunkt in einem Verbrennungsmotor zu vermeiden.

Diese Aufgabe wird gemäß der vorliegenden Erfindung durch ein Verfahren zum Vermeiden einer Vorentflammung nach Anspruch 1, einen Verbrennungsmotor nach Anspruch 9 und ein Fahrzeug nach Anspruch 11 gelöst. Die abhängigen Ansprüche definieren bevorzugte und vorteilhafte Ausführungsformen der Erfindung.

Gemäß der vorliegenden Erfindung wird ein Verfahren zum Vermeiden einer Vorentflammung einer Zylinderladung vor einem geplanten Zündzeitpunkt in einem Verbrennungsmotor bereitgestellt. Bei dem Verfahren wird ein Druck in einem Kurbelgehäuse des Verbrennungsmotors derart eingestellt, dass dadurch verhindert wird, dass durch ein Druckverhältnis zwischen dem Kurbelgehäuse und einem Brennraum eines Zylinders des Verbrennungsmotors ein Transport von Schmierölbestandteilen von dem Kurbelgehäuse zu dem Brennraum auftritt. Anders ausgedrückt wird der Druck in dem Kurbelgehäuse des Verbrennungsmotors derart eingestellt, dass ein Transport von Schmierölbestandteilen von dem Kurbelgehäuse in den Brennraum im Wesentlichen verhindert wird.

Das erfindungsgemäße Verfahren zum Vermeiden der Vorentflammung einer Zylinderladung vor einem geplanten Zündzeitpunkt in einem Verbrennungsmotor umfasst das Einstellen eines Drucks in dem Kurbelgehäuse des einen saugseitig eines Brennraumes angeordneten Verdichter umfassenden Verbrennungsmotors derart, dass in Abhängigkeit des Druckes in einem Saugrohr verhindert wird, dass durch ein Druckverhältnis zwischen dem Kurbelgehäuse und dem mit dem Saugrohr gekoppelten Brennraum eines Zylinders des Verbrennungsmotors ein Transport von Schmierölbestandteilen von dem Kurbelgehäuse zu dem Brennraum auftritt, indem der Innenraum des Kurbelgehäuses in Abhängigkeit des in dem Saugrohr herrschenden Druckes mit einem Innenraum des Saugrohrs oder mit einer Ansaugseite des Verdichters gekoppelt wird.

Der Brennraum ist gegenüber einem Innenraum des Kurbelgehäuses durch den Kolben und die Kolbenringe abgedichtet. Diese Abdichtung ist jedoch nicht absolut dicht, so dass beispielsweise während des Verdichtungstakts und des Arbeitstakts des Zylinders Luft, Kraftstoff oder Abgase in das Kurbelgehäuse gedrückt werden können. Dieser Effekt wird auch als Blow-by-Effekt bezeichnet. Umgekehrt ist es möglich, dass während beispielsweise eines Ansaugtakts Schmierölbestandteile, welche zur Schmierung des Verbrennungsmotors in dem Kurbelgehäuse vorhanden sind, trotz der Abdichtung in den Brennraum gelangen können. Dieser Transport von Schmierölbestandteilen von dem Kurbelgehäuse in den Brennraum kann dadurch begünstigt werden, dass in dem Kurbelgehäuse ein höherer Druck als in dem Brennraum herrscht. Bei geringen Lasten des Verbrennungsmotors kann der absolute Saugrohrdruck auf beispielsweise 250 mbar sinken. Dieser Druck stellt sich bei geöffnetem Einlassventil auch im Brennraum ein. Um zu verhindern, dass Schmierölbestandteile von dem Kurbelgehäuse in den Brennraum entlang der Zylinderinnenwand an den Kolbenringen vorbei gelangen, ist ein entsprechend geringer Druck in dem Kurbelgehäuse einzustellen. Indem verhindert wird, dass Schmierölbestandteile in den Brennraum gelangen, können Vorentflammungen aufgrund dieser Schmierölbestandteile verringert werden. Darüber hinaus können die Schmierölbestandteile in dem Brennraum Ablagerungen bilden, welche wiederum die Vorentflammungsneigung erhöhen. Somit kann auch die Ablagerungsbildung im Brennraum verringert werden, indem der Transport von Schmierölbestandteilen von dem Kurbelgehäuse in den Brennraum verhindert wird.

Gemäß einer Ausführungsform kann der Druck in dem Kurbelgehäuse auf einen Unterdruck im Bereich von 100-700 mbar gegenüber einem Umgebungsdruck außerhalb des Verbrennungsmotors eingestellt werden.

Die Einstellung des Unterdrucks erfolgt in Abhängigkeit von einem Betriebszustand und insbesondere von einem Druck in dem Saugrohr des Verbrennungsmotors.

Beispielsweise kann der Druck in dem Kurbelgehäuse auf einen im Wesentlichen gleichen Druck, welcher in dem Brennraum bei geöffnetem Einlassventil des Zylinders herrscht, eingestellt werden. Im Wesentlichen bedeutet dabei beispielsweise, dass der Druck in dem Kurbelgehäuse um maximal 10% von dem Druck in dem Brennraum bei geöffnetem Einlassventil des Zylinders abweicht. Der Druck in dem Kurbelgehäuse wird eingestellt, indem ein Unterdruck von dem mit dem Brennraum gekoppelten Saugrohr des Verbrennungsmotors zu dem Kurbelgehäuse zugeführt wird. Dabei ist zu beachten, dass die Zuführung ausreichend groß dimensioniert ist, um auch bei einem schnellen Druckwechsel in dem Saugrohr einen entsprechend schnellen Druckwechsel in dem Kurbelgehäuse zu erreichen. Beispielsweise muss ein Ölabscheider, welcher in der Verbindung zwischen Kurbelgehäuse und Saugrohr angeordnet ist, um einen Transport von Schmieröl von dem Kurbelgehäuse in das Saugrohr zu vermeiden, derart dimensioniert sein, dass eine Unterdruckänderung in dem Saugrohr innerhalb einer möglichst kurzen Zeit auch zu einer entsprechenden Druckänderung in dem Kurbelgehäuse führt, da sonst die Gefahr besteht, dass in dieser Zeit Schmierölbestandteile aufgrund des höheren Drucks in dem Kurbelgehäuse von dem Kurbelgehäuse in den Brennraum gelangen.

Der Verbrennungsmotor umfasst den Verdichter, welcher beispielsweise von einem Abgasturbolader angetrieben wird und welcher ausgestaltet ist, in dem mit dem Brennraum gekoppelten Saugrohr des Verbrennungsmotors einen Druck zu erhöhen. Um den Druck in dem Kurbelgehäuse derart einzustellen, dass verhindert wird, dass durch ein Druckverhältnis zwischen dem Kurbelgehäuse und dem Brennraum ein Transport von Schmierölbestandteilen von dem Kurbelgehäuse zu dem Brennraum auftritt, wird das Kurbelgehäuse wahlweise strömungstechnisch mit dem Saugrohr oder einer Ansaugseite des Verdichters gekoppelt.

Wenn der Druck im Saugrohr kleiner als der Druck an der Ansaugseite des Verdichters ist, wird das Kurbelgehäuse mit dem Saugrohr gekoppelt, so dass der Druck im Kurbelgehäuse im Wesentlichen dem Druck im Brennraum des Zylinders bei geöffnetem Einlassventil des Zylinders entspricht.

Wenn der Druck an der Ansaugseite des Verdichters kleiner ist als der Druck im Saugrohr, wird das Kurbelgehäuse mit der Ansaugseite des Verdichters gekoppelt. Somit kann sichergestellt werden, dass in dem Kurbelgehäuse immer ein möglichst geringer Druck herrscht, d.h. dass in dem Kurbelgehäuse ein größtmöglicher Unterdruck herrscht, so dass ein Transport von Schmierölbestandteilen von dem Kurbelgehäuse zu dem Brennraum wirksam verhindert werden kann.

Das Einstellen des Drucks in dem Kurbelgehäuse kann mittels eines Ventils durchgeführt werden, welches in einer Verbindung zwischen dem Saugrohr und dem Kurbelgehäuse oder zwischen der Ansaugseite des Verdichters und dem Kurbelgehäuse angeordnet ist. Mittels des Ventils kann der Druck in dem Kurbelgehäuse beispielsweise in Abhängigkeit eines Betriebszustands des Verbrennungsmotors eingestellt werden. Die Ventile können auch Rückschlagventile umfassen.

In einer anderen Ausführungsform kann der Druck in dem Kurbelgehäuse mittels einer Unterdruckpumpe eingestellt werden. Dadurch kann der Druck in dem Kurbelgehäuse eingestellt werden, ohne den Druck im Saugrohr oder an der Ansaugseite des Verdichters zu beeinflussen.

Gemäß der vorliegenden Erfindung wird weiterhin ein Verbrennungsmotor mit einer Vorrichtung zum Vermeiden einer Vorentflammung einer Zylinderladung vor einem geplanten Zündzeitpunkt in dem Verbrennungsmotor bereitgestellt. Die Vorrichtung ist in der Lage, einen Druck in einem Kurbelgehäuse des Verbrennungsmotors derart einzustellen, dass verhindert wird, dass durch ein Druckverhältnis zwischen dem Kurbelgehäuse und einem Brennraum eines Zylinders des Verbrennungsmotors ein Transport von Schmierölbestandteilen von dem Kurbelgehäuse zu dem Brennraum auftritt. Der Verbrennungsmotor kann ferner zur Durchführung der zuvor beschriebenen Verfahren ausgestaltet sein und umfasst daher auch die zuvor beschriebenen Vorteile.

Schließlich wird gemäß der vorliegenden Erfindung ein Fahrzeug mit dem zuvor beschriebenen Verbrennungsmotor bereitgestellt. Der Verbrennungsmotor kann insbesondere einen hoch aufgeladenen Verbrennungsmotor umfassen, so dass das Fahrzeug einen geringen Kraftstoffverbrauch aufweist. Indem der Verbrennungsmotor eine Vorrichtung zum Vermeiden einer Vorentflammung aufweist, kann die Haltbarkeit des Verbrennungsmotors erhöht werden.

Die vorliegende Erfindung wird nachfolgend unter Bezugnahme auf die Zeichnung im Detail beschrieben werden.
Fig. 1 zeigt Zylinderdruckverläufe von regulären Verbrennungen und von Verbrennungen mit Vorentflammungen.
Fig. 2 zeigt einen Verbrennungsmotor gemäß einer Ausführungsform der vorliegenden Erfindung.
Fig. 3 zeigt ein Fahrzeug gemäß einer Ausführungsform der vorliegenden Erfindung.
Fig. 2 zeigt einen Verbrennungsmotor 10 mit einem Zylinder 11, einem Kurbelgehäuse 12, einem Ansaugrohr 13, einem Verdichter 14 und einem Abgasrohr 15. In einem Zylinderkopf des Zylinders 11 sind ein Einlassventil 16 und ein Auslassventil 17 angeordnet. In einem Brennraum 18 des Zylinders 11 ist ein Kolben 19 vorgesehen, welcher über eine Pleuelstange 20 eine Kurbelwelle 21 des Verbrennungsmotors 10 antreibt. Die Kurbelwelle 21 befindet sich in einem Innenraum 22 des Kurbelgehäuses 12. Ferner befindet sich in dem Innenraum 22 Schmieröl 23, welches zur Schmierung beweglicher Teile des Verbrennungsmotors 10 mittels einer nicht gezeigten Ölpumpe in den Verbrennungsmotor gepumpt wird. In dem Ansaugrohr 13 ist eine Drosselklappe 24 angeordnet, welche zur Laststeuerung des Verbrennungsmotors 10 eine Menge von Frischluft, welche dem Zylinder 11 zugeführt wird, einstellt. Der Verbrennungsmotor 10 verfügt über weitere Komponenten, wie zum Beispiel über Kraftstoffeinspritzventile und eine Zündkerze, welche jedoch aus Gründen der Übersichtlichkeit in der Fig. 2 weggelassen wurden. In Abhängigkeit der motorischen Randbedingungen des Verbrennungsmotors 10 kann es im Betrieb des Verbrennungsmotors zu einem Transport von Schmierölbestandteilen des Schmieröls 23 von dem Kurbelgehäuse 12 in den Brennraum 11 kommen. Dies kann insbesondere dann auftreten, wenn der Druck in dem Innenraum 22 des Kurbelgehäuses 12 größer als der Druck in dem Brennraum 18 des Zylinders 11 ist. Schmierölbestandteile im Brennraum 18 können zu einer Vorentflammung führen oder Ablagerungen bilden, welche wiederum eine Vorentflammung begünstigen können.

Um zu vermeiden, dass Schmierölbestandteile von dem Innenraum 22 des Kurbelgehäuses 12 in den Brennraum 18 des Zylinders 11 gelangen und um somit eine Vorentflammung zu vermeiden, umfasst der Verbrennungsmotor 10 eine Fluidverbindung 25, welche den Innenraum 22 des Kurbelgehäuses 12 mit einem Innenraum des Saugrohrs 13 koppelt. Weiterhin umfasst der Verbrennungsmotor 10 eine Fluidverbindung 26, welche den Innenraum 22 des Kurbelgehäuses 12 mit einer Ansaugseite des Verdichters 14 verbindet. Schließlich umfasst der Verbrennungsmotor 10 eine weitere Fluidverbindung 27, welche mit einer Unterdruckpumpe 28 gekoppelt ist. An einem Übergang zwischen den Fluidverbindungen 25-27 und dem Innenraum 22 des Kurbelgehäuses 12 kann jeweils ein Ölabscheider angeordnet sein, um zu verhindern, dass Schmieröl 23 durch die Fluidverbindungen 25-27 transportiert wird. Mittels der Fluidverbindungen 25-27 kann ein Unterdruck in dem Innenraum des Kurbelgehäuses 12 aufgebaut werden. Mittels der Pumpe 28 kann beispielsweise ein konstanter Unterdruck oder ein von einem Betriebspunkt des Verbrennungsmotors 10 abhängiger Unterdruck in dem Innenraum 22 des Kurbelgehäuses 12 eingestellt werden. Der Unterdruck kann beispielsweise derart eingestellt werden, dass bei einem Ansaugtakt des Verbrennungsmotors 10 der Druck in dem Innenraum 22 des Kurbelgehäuses 12 im Wesentlichen dem Druck in dem Innenraum 18 entspricht oder nur geringfügig größer ist, beispielsweise maximal 100 mbar größer als der Druck in dem Brennraum 18. Da der Druck in dem Saugrohr 13 bei geöffnetem Einlassventil 16 im Wesentlichen dem Druck in dem Brennraum 18 entspricht, kann über die Fluidverbindung 25 ebenfalls ein Druck in dem Innenraum 22 des Kurbelgehäuses 12 hergestellt werden, welcher im Wesentlichen dem Druck in dem Brennraum 18 entspricht oder welcher nur geringfügig größer ist, beispielsweise maximal 100 mbar. Um den Druck in dem Kurbelgehäuse 12 möglichst schnell an sich ändernde Druckverhältnisse in dem Saugrohr 13 anpassen zu können, weist die Fluidverbindung 25 einen geeigneten Durchmesser von beispielsweise 8-10 mm auf. Über die Fluidverbindung 26 kann weiterhin ein Unterdruck in dem Kurbelgehäuse 12 aufgebaut werden, selbst wenn mittels des Verdichters 14 der Druck in dem Saugrohr 13 erhöht wird. In den Fluidverbindungen 25 und 26 können zusätzlich Ventile 29 bzw. 30 angeordnet sein, um einen geeigneten Druck in dem Kurbelgehäuse 12 einzustellen. Die Ventile 29 und 30 können beispielsweise Rückschlagventile sein, welche nur einen Fluidfluss in den Fluidverbindungen 25 und 26 in Pfeilrichtung erlauben. Alternativ können die Ventile 29 und 30 einstellbare Ventile sein, beispielsweise Taktventile, um beispielsweise einen Druck in dem Kurbelwellengehäuse 12 zwischen dem Saugrohrdruck und dem Umgebungsdruck einzustellen. Dies kann beispielsweise bei hochdynamischen Vorgängen, bei welchen der Kurbelgehäusedruck nicht dem Saugrohrdruck angepasst werden muss, von Vorteil sein. Indem der Druck in dem Kurbelwellengehäuse 12 über die Fluidverbindungen 25-27 derart eingestellt wird, dass ein Transport von Schmierölbestandteilen von dem Kurbelgehäuse 12 zu dem Brennraum 18 im Wesentlichen nicht auftritt, kann eine Vorentflammung in dem Zylinder 11 vermieden werden.

Der Verbrennungsmotor 10 kann alle drei Fluidverbindungen 25-27 oder nur einzelne oder eine beliebige Kombination der Fluidverbindungen 25-27 aufweisen.

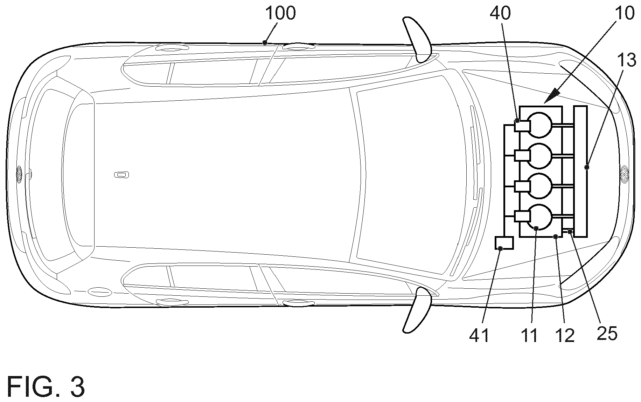

Fig. 3 zeigt ein Fahrzeug 100 mit dem Verbrennungsmotor 10 der Fig. 2. Der Verbrennungsmotor 10 umfasst mehrere Zylinder 11, welche mit einem Saugrohr 13 zur Versorgung mit Frischluft gekoppelt sind. Der Innenraum des Kurbelgehäuses 12 ist über die Fluidverbindung 25 mit dem Saugrohr 13 gekoppelt, um in dem Kurbelgehäuse 12 einen Druck einzustellen, welcher im Wesentlichen dem Druck in dem Saugrohr 13 entspricht. Dadurch kann vermieden werden, dass Schmierölbestandteile aus dem Kurbelgehäuse 12 in den Brennraum des Zylinders 18 gelangen und somit kann eine Vorentflammung in den Zylindern 11 vermieden werden.

## Patentansprüche

1. Verfahren zum Vermeiden einer Vorentflammung einer Zylinderladung vor einem geplanten Zündzeitpunkt in einem Verbrennungsmotor, umfassend:
- Einstellen eines Drucks in einem Kurbelgehäuse (12) des einen saugseitig eines Brennraumes (18) angeordneten Verdichter (14) umfassenden Verbrennungsmotors (10) derart, dass in Abhängigkeit des Druckes in einem Saugrohr (13) verhindert wird, dass durch ein Druckverhältnis zwischen dem Kurbelgehäuse (12) und dem mit dem Saugrohr (13) gekoppelten Brennraum (18) eines Zylinders (11) des Verbrennungsmotors (10) ein Transport von Schmierölbestandteilen von dem Kurbelgehäuse (12) zu dem Brennraum (18) auftritt, indem ein Innenraum (22) des Kurbelgehäuses (12) in Abhängigkeit des in dem Saugrohr (13) herrschenden Druckes mit dem Saugrohr (13) oder mit einer Ansaugseite des Verdichters (14) gekoppelt wird.

2. Verfahren nach Anspruch 1, wobei das Einstellen des Drucks in dem Kurbelgehäuse (12) ein Einstellen des Drucks auf einen Unterdruck von 100-700 mbar gegenüber einem Umgebungsluftdruck umfasst.

3. Verfahren nach Anspruch 1, wobei der Verbrennungsmotor (10) den Verdichter (14) umfasst, welcher ausgestaltet ist, in dem mit dem Brennraum (18) gekoppelten Saugrohr (13) des Verbrennungsmotors (10) einen Druck zu erhöhen.

4. Verfahren nach Anspruch 1, wobei, wenn der Druck im Saugrohr (13) kleiner als der Druck an der Ansaugseite des Verdichters (14) ist, das Kurbelgehäuse (12) mit dem Saugrohr (13) derart gekoppelt wird, dass der Druck im Kurbelgehäuse (12) im Wesentlichen dem Druck im Brennraum (18) bei geöffnetem Einlassventil (16) des Zylinders (11) entspricht.

5. Verfahren nach Anspruch 1, wobei, wenn der Druck an der Ansaugseite des Verdichters (14) kleiner als der Druck im Saugrohr (13) ist, das Kurbelgehäuse (12) mit der Ansaugseite des Verdichters (14) gekoppelt wird.

6. Verfahren nach Anspruch 1, wobei das Einstellen des Drucks in dem Kurbelgehäuse (12) ein Einstellen des Drucks mittels eines Ventils (29) umfasst, welches in einer Verbindung (25) zwischen dem Saugrohr (13) und dem Kurbelgehäuse (12) angeordnet ist.

7. Verfahren nach Anspruch 1, wobei das Einstellen des Drucks in dem Kurbelgehäuse (12) ein Einstellen des Drucks mittels eines Ventils (30) umfasst, welches in einer Verbindung (26) zwischen der Ansaugseite des Verdichters (14) und dem Kurbelgehäuse (12) angeordnet ist.

8. Verfahren nach Anspruch 1, wobei das Einstellen des Drucks in dem Kurbelgehäuse (12) ein Einstellen des Drucks mittels einer Unterdruckpumpe (28) umfasst.

9. Verbrennungsmotor, umfassend:
- eine Vorrichtung (25-28) zum Vermeiden einer Vorentflammung einer Zylinderladung vor einem geplanten Zündzeitpunkt in dem einen Verbrennungsmotor (10), der saugseitig eines Brennraumes (18) einen Verdichter (14) umfasst, wobei die Vorrichtung (25-28) ausgestaltet ist, einen Druck in einem Kurbelgehäuse (12) des Verbrennungsmotors (10) in Abhängigkeit des Druckes in einem Saugrohr (13) derart einzustellen, dass verhindert wird, dass durch ein Druckverhältnis zwischen dem Kurbelgehäuse (12) und dem mit dem Saugrohr (13) gekoppelten Brennraum (18) eines Zylinders (11) des Verbrennungsmotors (10) ein Transport von Schmierölbestandteilen von dem Kurbelgehäuse (12) zu dem Brennraum (18) auftritt, wobei das Kurbelgehäuse (12) in Abhängigkeit des in dem Saugrohr (13) herrschenden Druckes mit dem Saugrohr (13) oder mit einer Ansaugseite des Verdichters (14) gekoppelt ist.

10. Verbrennungsmotor nach Anspruch 9, wobei der Verbrennungsmotor (10) zur Durchführung des Verfahrens nach einem der Ansprüche 1-8 ausgestaltet ist.

11. Fahrzeug mit einem Verbrennungsmotor (10) nach einem der Ansprüche 9 oder 10.

## Claims

1. Method for preventing a premature ignition of a cylinder charge in advance of a planned ignition point in an internal combustion engine, comprising:
- adjustment of a pressure in a crankcase (12) of the internal combustion engine (10), which comprises a compressor (14) arranged on the intake side of a combustion chamber (18), in such a way as to prevent, as function of the pressure in an inlet manifold (13), a transport of lubricating oil constituents from the crankcase (12) to the combustion chamber (18) due to a pressure ratio between the crankcase (12) and the combustion chamber (18), coupled to the inlet manifold (13), of a cylinder (11) of the internal combustion engine (10), in that an internal space (22) of the crankcase (12) is coupled to the inlet manifold (13) or to an intake side of the compressor (14) as a function of the pressure prevailing in the inlet manifold (13).

2. Method according to Claim 1, wherein the adjustment of the pressure in the crankcase (12) comprises an adjustment of the pressure to a negative pressure of 100-700 mbar relative to an ambient air pressure.

3. Method according to Claim 1, wherein the internal combustion engine (10) comprises the compressor (14), which is designed to increase a pressure in the inlet manifold (13) of the internal combustion engine (10) coupled to the combustion chamber (18).

4. Method according to claim 1, wherein if the pressure in the inlet manifold (13) is less than the pressure on the intake side of the compressor (14), the crankcase (12) is coupled to the inlet manifold (13) in such a way that the pressure in the crankcase (12) substantially corresponds to the pressure in the combustion chamber (18) when the inlet valve (16) of the cylinder (11) is opened.

5. Method according to Claim 1, wherein if the pressure on the intake side of the compressor (14) is less than the pressure in the inlet manifold (13), the crankcase (12) is coupled to the intake side of the compressor (14).

6. Method according to one of Claim 1, wherein the adjustment of the pressure in the crankcase (12) comprises an adjustment of the pressure by means of a valve (29), which is arranged in a connection (25) between the inlet manifold (13) and the crankcase (12).

7. Method according to Claim 1, wherein the adjustment of the pressure in the crankcase (12) comprises an adjustment of the pressure by means of a valve (30), which is arranged in a connection (25) between the intake side of the compressor (14) and the crankcase (12).

8. Method according to Claim 1, wherein the adjustment of the pressure in the crankcase (12) comprises an adjustment of the pressure by means of a vacuum pump (28).

9. Internal combustion engine, comprising:
- a device (25-28) for preventing a premature ignition of a cylinder charge in advance of a planned ignition point in the one internal combustion engine (10), which comprises a compressor (14) on the intake side of a combustion chamber (18), wherein the device (25-28) is designed to adjust a pressure in a crankcase (12) of the internal combustion engine (10) as a function of the pressure in an inlet manifold (13) in such a way as to prevent a transport of lubricating oil constituents from the crankcase (12) to the combustion chamber (18) due to a pressure ratio between the crankcase (12) and the combustion chamber (18), coupled to the inlet manifold (13), of a cylinder (11) of the internal combustion engine (10), wherein the crankcase (12) is coupled to the inlet manifold (13) or to an intake side of the compressor (14) as a function of the pressure prevailing in the inlet manifold (13).

10. Internal combustion engine according to Claim 9, wherein the internal combustion engine (10) is designed to perform the method according to one of Claims 1-8.

11. Vehicle having an internal combustion engine (10) according to either of Claims 9 and 10.

## Revendications

1. Procédé permettant d'éviter un préallumage d'une charge de cylindre avant un temps d'allumage prévu dans un moteur à combustion interne, comprenant :
- l'ajustement d'une pression dans un carter de vilebrequin (12) du moteur à combustion interne (10) comprenant un compresseur (14) disposé du côté d'aspiration d'une chambre de combustion (18), de telle sorte qu'en fonction de la pression dans un tube d'aspiration (13), on évite qu'il se produise, par un rapport de pression entre le carter de vilebrequin (12) et la chambre de combustion (18) d'un cylindre (11) du moteur à combustion interne (10) accouplée au tube d'aspiration (13), un transport de constituants d'huile de lubrification depuis le carter de vilebrequin (12) jusqu'à la chambre de combustion (18), par le fait qu'un espace interne (22) du carter de vilebrequin (12) est accouplé au tube d'aspiration (13) ou à un côté d'aspiration du compresseur (14) en fonction de la pression régnant dans le tube d'aspiration (13).

2. Procédé selon la revendication 1, dans lequel l'ajustement de la pression dans le carter de vilebrequin (12) comprend un ajustement de la pression à une dépression de 100-700 mbar par rapport à une pression de l'air environnant.

3. Procédé selon la revendication 1, dans lequel le moteur à combustion interne (10) comprend le compresseur (14) qui est configuré de manière à augmenter une pression dans le tube d'aspiration (13) du moteur à combustion interne (10) accouplé à la chambre de combustion (18).

4. Procédé selon la revendication 1, dans lequel, lorsque la pression dans le tube d'aspiration (13) est inférieure à la pression au niveau du côté d'aspiration du compresseur (14), le carter de vilebrequin (12) est accouplé au tube d'aspiration (13) de telle sorte que la pression dans le carter de vilebrequin (12) corresponde essentiellement à la pression dans la chambre de combustion (18) lorsque la soupape d'admission (16) du cylindre (11) est ouverte.

5. Procédé selon la revendication 1, dans lequel, lorsque la pression au niveau du côté d'aspiration du compresseur (14) est inférieure à la pression dans le tube d'aspiration (13), le carter de vilebrequin (12) est accouplé au côté d'aspiration du compresseur (14).

6. Procédé selon la revendication 1, dans lequel l'ajustement de la pression dans le carter de vilebrequin (12) comprend un ajustement de la pression au moyen d'une soupape (29) qui est disposée dans une connexion (25) entre le tube d'aspiration (13) et le carter de vilebrequin (12).

7. Procédé selon la revendication 1, dans lequel l'ajustement de la pression dans le carter de vilebrequin (12) comprend un ajustement de la pression au moyen d'une soupape (30) qui est disposée dans une connexion (26) entre le côté d'aspiration du compresseur (14) et le carter de vilebrequin (12).

8. Procédé selon la revendication 1, dans lequel l'ajustement de la pression dans le carter de vilebrequin (12) comprend un ajustement de la pression au moyen d'une pompe à dépression (28).

9. Moteur à combustion interne, comprenant :
- un dispositif (25-28) pour éviter un pré allumage d'une charge de cylindre avant un instant d'allumage prévu dans ledit moteur à combustion interne (10), qui comprend un compresseur (14) du côté d'aspiration d'une chambre de combustion (18), le dispositif (25-28) étant configuré pour ajuster une pression dans un carter de vilebrequin (12) du moteur à combustion interne (10) en fonction de la pression dans un tube d'aspiration (13) de telle sorte que l'on évite qu'il se produise, par un rapport de pression entre le carter de vilebrequin (12) et la chambre de combustion (18) d'un cylindre (11) du moteur à combustion interne (10) accouplée au tube d'aspiration (13), un transport de constituants d'huile de lubrification depuis le carter de vilebrequin (12) jusqu'à la chambre de combustion (18), le carter de vilebrequin (12) étant accouplé au tube d'aspiration (13) ou à un côté d'aspiration du compresseur (14) en fonction de la pression régnant dans le tube d'aspiration (13).

10. Moteur à combustion interne selon la revendication 9, le moteur à combustion interne (10) étant configuré de manière à mettre en oeuvre le procédé selon l'une quelconque des revendications 1 à 8.

11. Véhicule comprenant un moteur à combustion interne (10) selon l'une quelconque des revendications 9 ou 10.
